# EUROPEAN PATENT SPECIFICATION

(11) **EP 0 683 330 B1**
(45) Date of publication and mention of the grant of the patent: **31.03.1999**
(21) Application number: 95201254.0
(22) Date of filing: 13.05.1995
(51) Int. Cl.: F16D 55/14

(54) **Brake assembly for utility vehicles**
Bremsaufbau für Nutzfahrzeuge
Assemblage de frein pour véhicules utilitaires

(30) Priority: 21.05.1994 GB 9410183
(43) Date of publication of application: 22.11.1995
(73) Proprietor: NEW HOLLAND BELGIUM N.V., B-8210 Zedelgem (BE)
(72) Inventor: Deneir, Stephan P.G., B-8880 Ledegem (BE); Bernaert, Rudi A.M., B-8800 Roeselare (BE); Vandendriessche, Jean-Pierre, B-9420 Erpe-Mere (BE); Wouters, Raphael M., B-8840 Staden (BE); Monteyne, Niklaas G.C., B-8370 Blankenberge (BE); Lagast, Jean-Pierre C.E., B-8210 Zedelgem (BE); Depestel, Bernard E. D., B-8730 Oedelem (BE); Scherrens, Johnny M. F., B-8210 Zedelgem (BE)
(74) Representative: Vandenbroucke, Alberic

(56) References cited:
- EP-A- 0 192 396
- DE-A- 2 640 304
- GB-A- 1 020 091

## Description

This invention relates to brake assemblies for utility vehicles, such as tractors, agricultural harvesting machines, building and mining equipment. More particularly this invention relates to full disc brake assemblies, in which a braking action is obtained by forcing the exterior sides of friction discs against even surfaces of a static housing assembly.

Full disc brakes are well known in the art. Most commonly, the brake assembly comprises one or more pairs of friction discs, which are connected to a rotating shaft of the traction drive line and between which a brake actuator, comprising two actuator discs, is positioned. Such brake assembly is shown in GB-A-1 020 091. When the actuator discs are rotated with respect to each other by a mechanical link or cam mechanism, a ball-ramp mechanism effects an expansion of the brake actuator, so that the friction discs get squeezed between the brake actuator and the inner surfaces of the brake housing assembly. The resulting friction forces tend to rotate the brake actuator, of which one disc is forced against an abutment at the inside of the brake housing assembly, while the other actuator disc is rotated a little further, so that the ball-ramp mechanism pushes the actuator discs further apart and enlarges the forces on the friction discs, which slow down the rotating shaft in a braking action. As braking is needed for both rotation senses, a second abutment for the brake actuator is provided at the inside of the housing assembly, opposite to the first abutment. During braking action, these abutments also serve as pilots, which maintain the rotating actuator discs in coaxial relationship with the friction discs and the rotating shaft.

These brake assemblies are generally used on slowly moving vehicles for off-road operations. Their compact and closed construction made them attractive for use in the unclean circumstances, occurring during agricultural, building and mining work. Unfortunately however, the reliability of these brakes posed heavier problems. It was experienced that, under some circumstances, they suffer from lock-on and snatching problems and that their performance lacked consistency. Lock-on means that the brake remains engaged after a normal braking operation. When the driver does not become aware of this, the brakes get overheated. Snatching implies that there is no gradual braking action possible. High or low brake actuation forces equally engender a strong reaction of the brakes and an uncontrolled deceleration of the vehicle. Lack of consistency means that the brake performance does not remain constant over a long period and that the running-in of the brakes takes a long time.

These problems became more manifest after new legislation, which enforced the use of asbestos-free friction discs. Simultaneously, the amount of energy, which had to be dissipated by the brakes, became larger as the manufacturers increased both the weight and the travelling speed of the utility vehicles. In order to improve the reliability of the full disc brakes it was proposed to change the material properties of the abutments. Such changes included hardening of the abutment surfaces and the application of bronze inserts thereon.

In DE-A-26 40 304 the cause of lock-on is ascribed to the radial component of the force which is used to rotate the actuator discs in order to expand the actuator. This radial component engenders friction forces between the abutments and the actuator discs, such that the latter might get stuck. Accordingly it was proposed to use a cranked lever system which applies no substantial radial force upon the actuator.

None of these solutions yielded satisfactory results and the vehicle manufacturers were led to turn to other brake types, which are not always fit for the unclean operation circumstances.

It therefore is an object of the present invention to improve the functioning and the reliability of the full disc brakes by better control of the behaviour of the actuator discs inside the housing assembly.

According to the present invention, a brake assembly is provided, comprising:
- a pair of friction discs, parallel to each other and linkable to a rotating axle, each of the discs having interior friction surfaces and exterior friction surfaces;
- brake actuation means, comprising:

a first actuator disc and a second actuator disc with a generally circular circumference, which actuator discs are installed between and coaxially with said friction discs and have outer surfaces facing the interior friction surfaces of the friction discs, and protrusions extending from the generally circular circumferences of said actuator discs; and

expansion means for forcing said outer actuator disc surfaces away from each other and onto said interior friction surfaces of the friction discs; and
- a brake housing assembly, encompassing said friction discs and brake actuation means, having even inner surfaces, facing the exterior friction surfaces of the friction discs, and comprising a first, respectively second primary abutment, against which the protrusion of the first, respectively second actuator disc is forced in a generally tangential direction when said brake actuation means are actuated and said rotating axle rotates in a first, respectively second sense.

Said brake assembly is further characterized in that: the brake housing assembly further comprises at least one secondary abutment; and in that, during actuation of said actuation means, while said first actuator disc is forced against said first primary abutment, the circumference of said first actuator disc is forced against said secondary abutment and a clearance is maintained between said first actuator disc and the second primary abutment.

Thus is prevented that the first actuator disc gets clamped between the first and the second primary abutment and the brake does not disengage after a normal braking operation. Preferably, the secondary abutment has a convex border, extending over substantially forty degrees and lying between the primary abutments. It is positioned to take the radial forces on the circumference of the first actuator disc, when the latter is pivoted about the first primary abutment. The housing assembly may comprise a front cover, to which the secondary abutment is removably attached, and a rear portion, which contains the primary abutments and a further removable secondary abutment. In order to limit the impact forces during brake actuation, transversal cylindrical pins may be positioned between the protrusions of the actuator discs and the primary abutments of the actuator discs, as to limit the rotation angle of the latter with respect to the housing assembly.

A brake assembly in accordance with the present invention will now be described in greater detail, by way of example, with reference to the following drawings, in which:
Figure 1 is a front elevational view of a brake assembly, comprising a brake housing and a brake actuator, after removal of a front cover; and

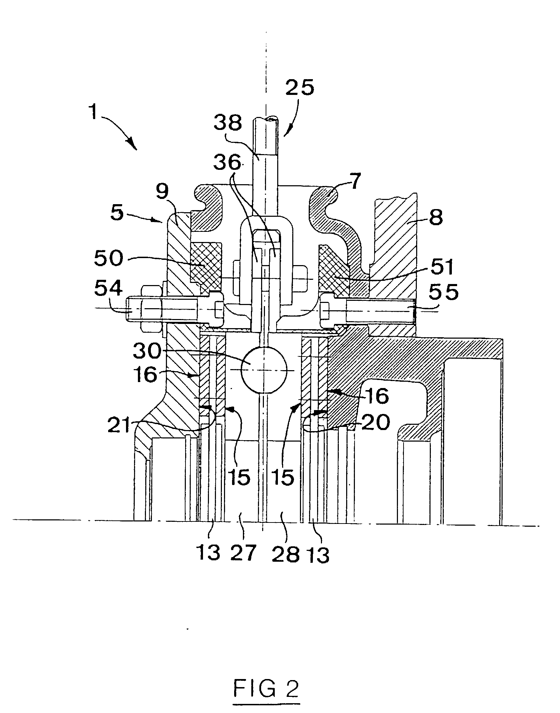

Figure 2 is a cross sectional view of the upper half of the brake assembly, taken along the line II-II of Figure 1.

In the drawings there is shown a brake assembly 1, which includes a housing assembly 5, comprising a brake housing 7, bolted onto a member 8 of the frame of a utility vehicle, and a housing cover 9, bolted onto said housing 7. A transmission axle with a splined end (not shown) extends through the frame member 8 and into the housing assembly 5. The splined end is received in the splined centre holes 14 of a pair of friction discs 13. The outer rings of said discs 13 are covered with a highly resistant friction material, forming interior friction surfaces 15 on the facing sides of the friction discs 13 and exterior friction surfaces 16 on the other sides of said discs 13.

The friction discs 13 are centred within the housing assembly 5 by three abutments 17, 18, 19, which extend from the inner circumference of the housing 7. The lower abutment 17 lies under the centre of the friction discs 13 and the positions of a first primary abutment 18 and a second primary abutment 19 is defined by rotation over 120 degrees to the left and to the right, starting from the lower abutment 17.

The inner portion of the housing 7, which faces the exterior surface 16 of the rear friction disc 13, has an even surface 20, which is engaged by said rear disc 13 during braking operation. Similarly, the portion of the brake cover 9, which faces the exterior surface 16 of the front friction disc 13, has an even surface 21, which is parallel to the housing surface 20 and is engaged by the front disc 13 during braking operation.

A brake actuator 25, installed between the friction discs 13, comprises a first actuator disc 27 and a second actuator disc 28, which are equally centred within the housing 7 by the abutments 17, 18, 19 and are pulled together by a set of springs (not shown). The actuator discs 27, 28 are spaced by a set of steel balls 30, resting in oblong, shallow cavities in the facing sides of the actuator discs 27, 28. When one actuator disc 27 is rotated relative to the other disc 28, the balls 30 leave the deepest point of the cavities and force said discs 27, 28 outwardly.

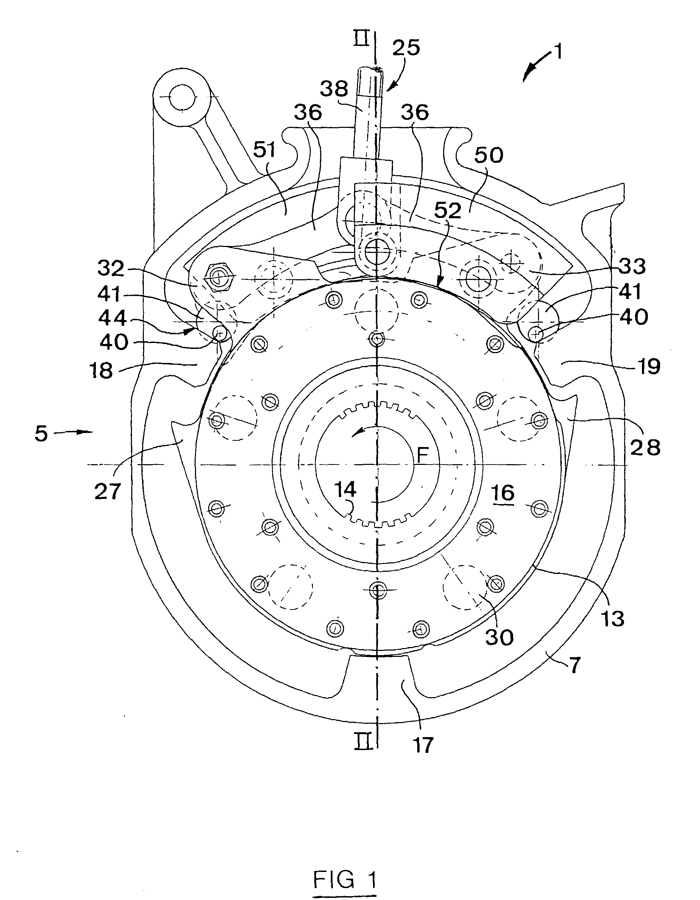

The first actuator disc 27 comprises a first protrusion 32, which is positioned above the first primary abutment 18, and the second actuator disc 28 comprises a second protrusion 33, which is positioned above the second primary abutment 19. Both protrusions 32, 33 are connected by links 36 to a pull rod 38. When the transmission axle and the friction discs 13 are conjointly rotating in a sense, as indicated by arrow F in Figure 1, and an upward force is applied to the pull rod 38, the protrusions 32, 33 are pulled to each other by the links 36, the one actuator disc 27 is rotated relative to the other actuator disc 28 and they are pushed apart by the balls 30. The friction discs 13 are compressed between the expanding brake actuator 25 and the even surfaces 20, 21 of the housing 7 and the cover 9. The actuator discs 27, 28, which are engaged by the interior friction surfaces 15 of the front friction discs 13, are entrained in the sense indicated by arrow F, until a radially extending impact surface of the protrusion 32 contacts the top side 44 of the first primary abutment 18. The halted actuator disc 27 tends to pivot upwardly about the first primary abutment 18, but is held in position in the prior art brake assemblies by the second primary abutment 19. Meanwhile the second actuator disc 28 is permitted to rotate a little further, whereby the brake actuator 25 is expanded again and the force on the friction discs 13 is enhanced accordingly.

When tension on the pull rod 38 is released, the actuator discs 27, 28 should be pulled together by the springs and return to their initial position, thereby disengaging the friction discs 13. It was experienced however that, under various circumstances, this disengagement did not take place, and the forces on the friction discs 13 were maintained without external command on the pull rod 38 of the actuator 25. Extensive experimentation proved that these problems were generated by the actuator disc 27, whereof one side was held by the first primary abutment 18 and the other side was wedged against the second primary abutment 19. This situation occurred mostly in the case of worn of damaged contact surfaces of the actuator disc 27 and the second primary abutment 19. Changes in the surface condition of this abutment 19, such as hardening or the application of bronze inserts, did not yield satisfactory results.

According to the present invention, a first secondary abutment 50 is attached with bolts 54 to the housing cover 9 and above the first actuator disc 27. Said abutment 50 has a convex impact surface 52, which has a radius which is substantially equal to or a little larger than the outer radius of the actuator disc 27 and which extends between the middle line II-II of the brake assembly 1 and the second primary abutment 19. The convex portion of the impact surface 52 covers an angle of about 40 degrees. The rotary projection over ninety degrees of the impact surface 44 of the first primary abutment 18 towards the second primary abutment 19 falls within the secondary abutment 50. As a result thereof, when the brake assembly 1 is actuated and the first actuator disc 27 tends to pivot about the first primary abutment 18, said disc 27 is forced perpendicularly against the secondary abutment 50. The position and the form of the impact surface 52 inhibit the occurrence of important tangential reaction forces, which might cause a wedge effect on said disc 27. The guide surface of the second primary abutment 19 lays more outwardly and is not contacted by the actuator disc 27; there remains a radial clearance inbetween.

Extensive experiments have proven that this configuration provides a more reliable and stable braking performance, which is no longer subject to lock-on and less subject to snatching problems and which is consistent over a longer period.

In order to obtain similar results for braking action, when the transmission axle is rotated in a sense opposite to arrow F, a second secondary abutment 51 is connected with bolts 55 to the inner side of the brake housing 7 in guiding relationship with the second actuator disc 28. When an upward force is applied to the pull rod 38, so that the actuator discs 27, 28 push the friction discs 13 against the housing 7 and the cover 9, the second actuator disc 28 is entrained in a sense opposite to arrow F and its protrusion 33 is pushed against the abutment 19. Said disc 28 tends to pivot upwardly about this abutment 19 and is forced with its upper side against the second secondary abutment 51, before it can contact the first primary abutment 18. Consequently, no wedge action will occur at the first primary abutment 18. The braking characteristics will thus be equal for braking operations in both senses.

Transverse cylindrical pins 40 are inserted between the primary abutments 18, 19 and the actuator disc protrusions 32, 33. They are loosely held in cavities 41 in the brake housing 7 and the cover 9. The pins 40 limit the free movement of the protrusions 32 before they are stopped by the primary abutments 18, 19. Without these pins 40, the actuator discs 27, 28 may build up a considerable speed before they hit said primary abutments 18, 19. The consequent impact may cause premature wear and deformation of the discs 27, 28 and the abutments 18, 19. It also produces an audible sound, which unnecessarily alarms the operator. These effects are reduced by the insertion of the pins 40 with an appropriate diameter, as to minimize the free path of travel of the protrusions 32, 33.

Other embodiments of the present invention can be thought of without departing from the original idea of the invention. For example, the brake assembly 1 may be attached under another angle to the vehicle frame, so that the actuator rod 38 has to be pulled downwardly or sideways for brake actuation. The rod and link mechanism can be replaced with a cam mechanism, in which the rotation of a cam axle rotates the actuator discs 27, 28 relative to one another in order to engage the friction discs 13. The actuator links 36 can be connected to other protrusions of the actuator discs 27, 28, wherein the other protrusions do not contact any portion of the brake housing 7, while the rotation of the actuator 25 remains limited by the original abutments 18, 19 and the protrusions 32,33. It is also envisageable to replace the ball-ramp mechanism with a hydraulic means for pushing the actuator discs 27, 28 apart. For larger braking power a plurality of friction discs 13 between static discs can be installed on both sides of the brake actuator 25.

It will be appreciated that there is provided a brake assembly 1 with secondary abutments 50, 51, which improve the reliability and the stability of the brake performance by inhibiting the clamping of the actuator 25 between the primary abutments 18, 19. Furthermore, the lifetime of the brake assembly 1 and the operator comfort is enhanced by inserting fill means, such as the pins 40, between the protrusions 32, 33 of the actuator discs 27, 28 and the primary abutments 18, 19.

## Claims

1. A brake assembly (1) comprising:
- a pair of friction discs (13), parallel to each other and linkable to a rotating axle, each of the discs (13) having interior friction surfaces (15) and exterior friction surfaces (16);
- brake actuation means (25), comprising:
- a first actuator disc (27) and a second actuator disc (28) with a generally circular circumference, which actuator discs (27, 28) are installed between and coaxially with said friction discs (13) and which have outer surfaces facing the interior friction surfaces (15) of the friction discs (13), and protrusions (32, 33) extending from the generally circular circumferences of said actuator discs (27, 28); and
- expansion means (30, 36, 38) for forcing said outer actuator disc surfaces away from each other and onto said interior friction surfaces (15) of the friction discs; and
- a brake housing assembly (5), encompassing said friction discs (13) and brake actuation means (25), having even inner surfaces (20, 21), facing the exterior friction surfaces (16) of the friction discs (13), and comprising a first, respectively second primary abutment (18, 19), against which the protrusion (32, 33) of the first, respectively second actuator disc (27, 28) is forced in a generally tangential direction when said brake actuation means (25) are actuated and said rotating axle rotates in a first, respectively second sense ;
said brake assembly (1) being characterized in that:
- the brake housing assembly (5) further comprises at least one secondary abutment (50); and
- during actuation of said actuation means (25), while said first actuator disc (27) is forced against said first primary abutment (18), the circumference of said first actuator disc (27) is forced against said secondary abutment (50) and a clearance is maintained between said first actuator disc (27) and the second primary abutment (19).

2. A brake assembly (1) according to claim 1, characterized in that the primary abutments (18, 19) lie on one side of the rotating axle and the actuator disc protrusions (32, 33) and the at least one secondary abutment (50) are positioned between the primary abutments (18, 19).

3. A brake assembly (1) according to claim 1 or 2, characterized in that the circumference of the first actuator disc (27) is forced against a convex border (52) of the secondary abutment (50), having a radius which is substantially equal to the radius of said circumference.

4. A brake assembly (1) according to claim 3, characterized in that the convex border (52) of the secondary abutment (50) extends over more than thirty degrees.

5. A brake assembly (1) according to claim 4, characterized in that the convex border (52) of the secondary abutment (50) extends over substantially forty degrees.

6. A brake assembly (1) according to any of the claims 3 to 5, characterized in that the protrusion (32) of the first actuator disc (27) has a substantially radially extending contact side and in that the rotary projection of the facing contact side (44) of the first primary abutment (18) over ninety degrees towards the second primary abutment (19) falls within the secondary abutment (50).

7. A brake assembly (1) according to any of the preceding claims, characterized in that the secondary abutment (50) is removably linked to the brake housing assembly (5).

8. A brake assembly (1) according to any of the preceding claims, characterized in that the brake housing assembly (5) comprises a removable front portion (9), comprising a first secondary abutment (50), engageable by the first actuator disc (27), and a rear portion (7), comprising the primary abutments (18, 19) and a second secondary abutment (51), engageable by the second actuator disc (28).

9. A brake assembly (1) according to any of the preceding claims, characterized in that removable filling means (40) are installed between at least one of the primary abutments (18, 19) and the facing protrusion (32, 33) of one of the actuator discs (27, 28).

10. A brake assembly (1) according to claim 6, characterized in that the filling means (40) are loosely held in cavities (41) of the brake housing assembly (5).

11. A brake assembly (1) according to claim 6 or 7, characterized in that the filling means (40) are in the form of a cylindrical pin.

## Patentansprüche

1. Bremsenbaugruppe (1) mit:
- zwei Reibscheiben (13), die parallel zueinander sind und mit einer rotierenden Welle verbindbar sind, wobei jede der Scheiben (13) innere Reibobeflächen (15) und äußere Reiboberflächen (16) aufweist,
- Bremsenbetätigungseinrichtungen (25), die:
- eine erste Betätigungsscheibe (27) und eine zweite Betätigungsscheibe (28), die einen allgemein kreisförmigen Umfang aufweisen, wobei die Betätigungsscheiben (27,28) zwischen den Reibscheiben (13) und koaxial zu diesen eingebaut sind und Außenoberflächen, die auf die inneren Reiboberflächen (15) der Reibscheiben (13) gerichtet sind, und Vorsprünge (32, 33) aufweisen, die sich von den allgemein kreisförmigen Umfängen der Betätigungsscheiben (27,28) erstrecken, und
- Aufspreizeinrichtungen (30,36,38) umfassen, um die äußeren Betätigungsscheiben-Oberflächen voneinander fort und auf die inneren Reiboberflächen (15) der Reibscheiben zu drücken und
- eine Bremsengehäusebaugruppe (5), die die Reibscheiben (13) und die Bremsenbetätigungseinrichtungen (25) umgibt und glatte Innenoberflächen (20,21) aufweist, die auf die äußeren Reiboberflächen (16) der Reibscheiben (13) gedrückt sind, wobei die Bremsengehäusebaugruppe (5) einen ersten bzw. einen zweiten primären Anschlag (18,19) aufweist, gegen den der Vorsprung (32,33) der ersten bzw. zweiten Betätigungsscheibe (27,28) in einer allgemein tangentialen Richtung gedrückt wird, wenn die Bremsenbetätigungseinrichtungen (25) betätigt werden und die rotierende Welle sich in einer ersten bzw. zweiten Richtung dreht,
wobei die Bremsenbaugruppe (1) dadurch gekennzeichnet ist, daß
- die Bremsengehäusebaugruppe (5) weiterhin zumindest einen sekundären Anschlag (50) aufweist, und
- während der Betätigung der Betätigungseinrichtungen (25) und während die erste Betätigungsscheibe (27) gegen den ersten primären Anschlag (18) gedrückt wird, der Umfang der ersten Betätigungsscheibe (27) gegen den sekundären Anschlag (50) gedrückt wird und ein Spiel zwischen der ersten Betätigungsscheibe (27) und dem zweiten primären Anschlag (19) aufrechterhalten wird.

2. Bremsenbaugruppe (1) nach Anspruch 1, dadurch gekennzeichnet, daß die primären Anschläge (18,19) auf einer Seite der rotierenden Welle liegen und daß die Betätigungsscheiben-Vorsprünge (32,33) und der zumindest eine sekundäre Anschlag (50) zwischen den primären Anschlägen (18,19) angeordnet sind.

3. Bremsenbaugruppe (1) nach Anspruch 1 oder 2, dadurch gekennzeichnet, daß der Umfang der ersten Betätigungsscheibe (27) gegen einen konvexen Rand (52) des sekundären Anschlages (50) gedrückt wird, der einen Radius aufweist, der im wesentlichen gleich dem Radius des Umfanges ist.

4. Bremsenbaugruppe (1) nach Anspruch 3, dadurch gekennzeichnet, daß sich der konvexe Rand (52) des sekundären Anschlags (50) über mehr als vierzig Grad erstreckt.

5. Bremsenbaugruppe (1) nach Anspruch 4, dadurch gekennzeichnet, daß sich der konvexe Rand (52) des sekundären Anschlages (50) über im wesentlichen vierzig Grad erstreckt.

6. Bremsenbaugruppe (1) nach einem der Ansprüche 3 bis 5, dadurch gekennzeichnet, daß der Vorsprung (32) der ersten Betätigungsscheibe (27) eine sich im wesentlichen radial erstreckende Kontaktseite aufweist, und daß die Drehprojektion der darauf gerichteten Kontaktseite (44) des ersten primären Anschlages (18) über 90 Grad in Richtung auf den zweiten primären Anschlag (19) innerhalb eines Bereiches des sekundären Anschlages (50) fällt.

7. Bremsenbaugruppe (1) nach einem der vorhergehenden Ansprüche, dadurch gekennzeichnet, daß der sekundäre Anschlag (50) lösbar mit der Bremsengehäusebaugruppe (5) verbunden ist.

8. Bremsenbaugruppe (1) nach einem der vorhergehenden Ansprüche, dadurch gekennzeichnet, daß die Bremsengehäusebaugruppe (5) einen entfernbaren vorderen Abschnitt (9) umfaßt, der einen ersten sekundären Anschlag (50) aufweist, der mit der ersten Betätigungsscheibe (27) in Eingriff bringbar ist, und daß die Bremsengehäusebaugruppe (5) einen hinteren Abschnitt (7) aufweist, der die primären Anschläge (18,19) und einen zweiten sekundären Anschlag (51) aufweist, der mit der zweitene Betätigungsscheibe (28) in Eingriff bringbar ist.

9. Bremsenbaugruppe (1) nach einem der vorhergehenden Ansprüche, dadurch gekennzeichnet, daß entferntbare Fülleinrichtungen (40) zwischen zumindest einem der primären Anschläge (18,19) und dem darauf gerichteten Vorsprung (32,33) einer der Betätigungsscheiben (27,28) eingebaut sind.

10. Bremsenbaugruppe (1) nach Anspruch 6, dadurch gekennzeichnet, daß die Fülleinrichtungen (40) lose in Hohlräumen (41) der Bremsengehäusebaugruppe (5) gehalten sind.

11. Bremsenbaugruppe (1) nach Anspruch 6 oder 7, dadurch gekennzeichnet, daß die Fülleinrichtungen (40) die Form eines zylindrischen Stiftes aufweisen.

## Revendications

1. Assemblage de freinage (1) comprenant:
- une paire de disques de friction (13), mutuellement parallèles et pouvant être reliés à un arbre rotatif, chacun de ces disques (13) possédant des surfaces intérieures (15) de friction et des surfaces (16) extérieures de friction;
- un moyen d'actionneur de freinage (25), comprenant:
un premier disque d'actionneur (27) et un second disque d'actionneur (28) possédant un pourtour généralement circulaire ; ces disques d'actionneur (27, 28) sont installés entre lesdits disques de friction (13), leur sont coaxiaux et possèdent des surfaces extérieures faisant face aux surfaces intérieures (15) des disques de friction(13), et des saillies (32, 33) se prolongeant à partir des pourtours généralement circulaires desdits disques d'actionneur (27, 28); et
un moyen d'expansion (30, 36, 38) pour contraindre lesdites surfaces extérieures des disques d'actionneur à l'écart l'une de l'autre et contre lesdites surfaces intérieures de friction (15) des disques de friction; et
- un assemblage de logement de freinage(5), entourant lesdits disques de friction (13) et moyen d'activation de freinage (25), possédant des surfaces intérieures (20, 21) planes faisant face à des surfaces extérieures (16) des disques de friction (13), et comprenant respectivement une première (18) et une seconde butées (19) primaires contre lesquelles la saillie (32, 33) du premier, respectivement du second disque d'actionneur (27, 28), est contrainte suivant une direction généralement tangentielle lorsque ledit moyen d'activation de freinage (25) est actionné et que ledit arbre rotatif tourne dans un premier, respectivement un second sens;
ledit assemblage de freinage (1) étant caractérisé en outre en ce que:
- de plus, l'assemblage de logement de freinage (5) comprend au moins une butée secondaire (50);
- et en ce que, durant l'actionnement dudit moyen d'activation (25), tandis que ledit premier disque d'actionneur (27) est contraint contre ladite première butée primaire (18), le pourtour dudit premier disque d'actionneur (27) est contraint contre ladite butée secondaire (50) et un espace est maintenu entre ledit premier disque d'actionneur (27) et la seconde butée primaire.(19)

2. Assemblage de freinage (1) selon la revendication 1, caractérisé en ce que les butées primaires (18, 19) sont situées d'un côté de l'arbre rotatif et que les saillies (32, 33) de disque d'actionneur et au moins une butée secondaire (50) sont positionnées entre les butées primaires (18, 19).

3. Assemblage de freinage (1) selon la revendication 1 ou 2, caractérisé en ce que le pourtour du premier disque d'actionneur (27) est contraint contre un bord convexe (52) de la butée secondaire (50), possédant un rayon substantiellement égal au rayon dudit pourtour.

4. Assemblage de freinage (1) selon la revendication 3, caractérisé en ce que le bord convexe (52) de la butée secondaire (50) s'étend sur plus de trente degrés.

5. Assemblage de freinage (1) selon la revendication 4, caractérisé en ce que le bord convexe (52) de la butée secondaire s'étend substantiellement sur quarante degrés.

6. Assemblage de freinage (1) selon l'une quelconque des revendications 3 à 5, caractérisé en ce que la saillie (32) du premier disque d'actionneur (27) possède une face de contact substantiellement d'extension radiale, et en ce que la rotation géométrique de la face de contact (44) de la première butée primaire (18) suivant quatre-vingt-dix degrés en direction de la seconde butée primaire (19) tombe dans la butée secondaire (50).

7. Assemblage de freinage (1) selon l'une quelconque des revendications précédentes, caractérisé en ce que la butée secondaire (50) est reliée amoviblement à l'assemblage de logement de freinage (5).

8. Assemblage de freinage (1) selon l'une quelconque des revendications précédentes, caractérisé en ce que l'assemblage de logement de freinage (5) comprend une partie avant amovible (9), comprenant une première butée secondaire (50), pouvant être engagée par le premier disque d'actionneur (27), et une partie arrière (7), comprenant les butées primaires (18, 19) et une seconde butée secondaire (51), pouvant être engagée par le second disque d'actionneur (28).

9. Assemblage de freinage (1) selon l'une quelconque des revendications précédentes, caractérisé en ce que des moyens amovibles de remplissage (40) sont installés entre au moins une des butées primaires (18, 19) et la saillie faisant face (32, 33) de l'un des disques d'actionneur (27, 28).

10. Assemblage de freinage (1) selon la revendication 6, caractérisé en ce que les moyens de remplissage (40) sont maintenus lâchement dans des cavités (41) de l'assemblage de logement de freinage (5).

11. Assemblage de freinage (1) selon la revendication 6 ou 7, caractérisé en ce que les moyens de remplissage (40) sont sous la forme de broches cylindriques.
